## Europäisches Patentamt

## European Patent Office

## Office européen des brevets

(11) Veröffentlichungsnummer: **0 122 555**
**B1**

(12) **EUROPÄISCHE PATENTSCHRIFT**

(45) Veröffentlichungstag der Patentschrift:
**29.06.88**

(21) Anmeldenummer: **84103787.2**

(22) Anmeldetag: **05.04.84**

(51) Int. Cl.⁴: **G 01 L 1/16,** G 01 L 9/08,
G 01 L 23/10

(54) **Vorrichtung zur Erfassung von Kräften.**

(30) Priorität: **18.04.83 DE 3314032**

(43) Veröffentlichungstag der Anmeldung:
**24.10.84 Patentblatt 84/43**

(45) Bekanntmachung des Hinweises auf die Patenterteilung:
**29.06.88 Patentblatt 88/26**

(84) Benannte Vertragsstaaten:
**BE DE FR GB IT**

(56) Entgegenhaltungen:
**US-A-3 701 903**

**MESURES, REGULATION, AUTOMATISME, Band
46, Nr. 11, November 1981, Seiten 73-85, Paris, FR; F.
MICHERON:"Vers une nouvelle génération de
capteurs grâce aux polymères piézoélectriques"**

(73) Patentinhaber: **Siemens Aktiengesellschaft Berlin
und München, Wittelsbacherplatz 2, D-8000
München 2 (DE)**

(72) Erfinder: **Schewe, Herbert, Dr., Haydnstrasse 58,
D-8522 Herzogenaurach (DE)**
Erfinder: **Schmidt, Otto, Gebbertstrasse 162, D-8520
Erlangen (DE)**

Anmerkung: Innerhalb von neun Monaten nach der Bekanntmachung des Hinweises auf die Erteilung des europäischen Patents im
Europäischen Patentblatt kann jedermann beim Europäischen Patentamt gegen das erteilte europäische Patent Einspruch einlegen.
Der Einspruch ist schriftlich einzureichen und zu begründen. Er gilt erst als eingelegt, wenn die Einspruchsgebühr entrichtet worden
ist (Art. 99(1) Europäisches Patentübereinkommen).

## Beschreibung

Die Erfindung betrifft eine Vorrichtung zur Erfassung von Kräften mit einem piezoelektrischen Wandler.

Es ist ein piezoelektrischer Drucksensor für Kraftfahrzeuge bekannt, bei dem zwei piezoelektrische Kristalle, die an einem Kraftfahrzeug montiert sind, elektrisch parallelgeschaltet sind. Diesen piezoelektrischen Kristallen sind ein Spannungsbegrenzer, ein Integrator, ein Detektor und eine Auslösevorrichtung zugeordnet. Als Spannungsbegrenzer ist eine Zener-Diode vorgesehen und als Integrator wird eine Reihenschaltung aus einem Widerstand und einer Kapazität verwendet. Ferner ist als Detektor ein Feldeffekttransistor FET vorgesehen, dessen Gate- und Sourceanschluß mit der Kapazität des Integrators verbunden sind. Die Auslösevorrichtung ist dem Drainanschluß des Feldeffekttransistors FET zugeordnet (kanadische Patentschrift 95 09 92). Durch diese Gestaltung des Drucksensors für Kraftfahrzeuge können nur dynamische jedoch keine statische Drücke erfaßt werden.

Der Erfindung liegt nun die Aufgabe zugrunde, eine Vorrichtung zur Erfassung von Kräften anzugeben, mit der man auch statische Kräfte mit einer Zeitdauer von mehreren Minuten erfassen kann.

Diese Aufgabe wird erfindungsgemäß mit den Merkmalen des Anspuchs 1 gelöst.

Zur weiteren Erläuterung wird auf die Zeichnung Bezug genommen, in der Ausführungsbeispiele schematisch veranschaulicht sind.

Figur 1 zeigt eine Vorrichtung gemäß der Erfindung und in den

Figuren 2 bis 6 sind Diagramme veranschaulicht, die einen Signalplan bilden. In

Figur 7 ist eine weitere Ausführungsform der Erfindung dargestellt und die

Figuren 8 und 9 zeigen den Verlauf der Taktsignale $T_3$ und $T_4$ gemäß der Ausführungsform nach Figur 7 jeweils in einem Diagramm.

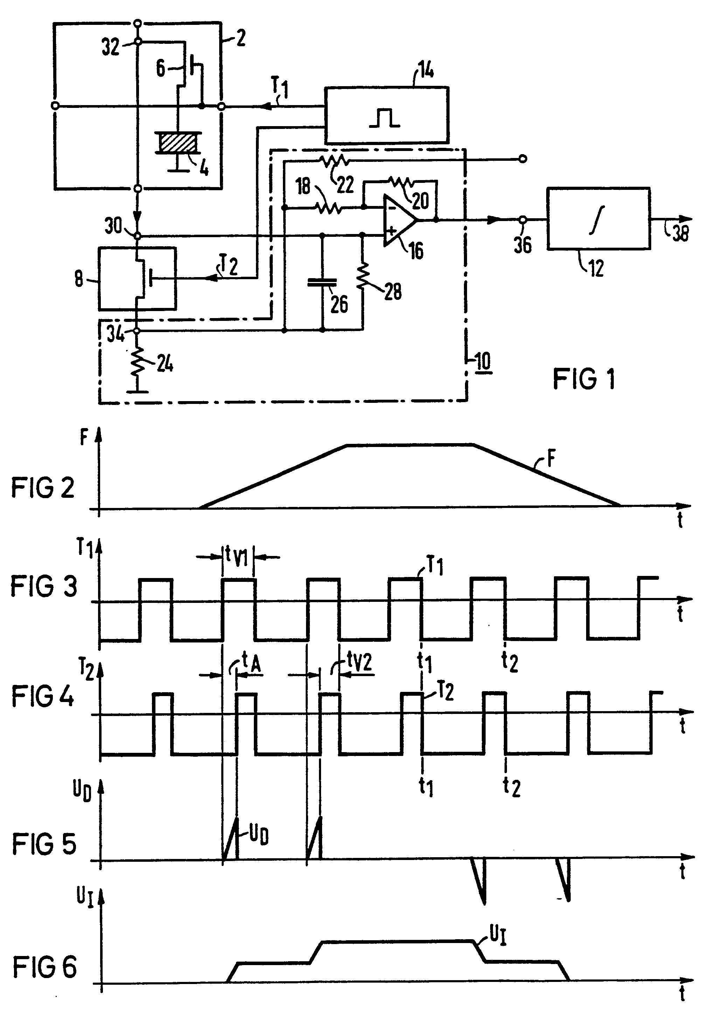

Eine Vorrichtung zur Erfassung von Kräften enthält in der Ausführungsform nach Figur 1 eine Anordnung 2, die mit einem Wandler 4, vorzugsweise einer piezoelektrischen Folie aus Polyvinyliden-Fluorid PVDF, und einem ersten elektronischen Schalter 6, vorzugsweise einem Feldeffekttransistor FET, versehen ist. Dieser Anordnung 2 ist ein weiterer elektronischer Schalter 8, vorzugsweise ein Feldeffekttransistor FET, sowie ein Spannungsverstärker 10 mit integriertem Diskriminator und ein Integrator 12 zugeordnet. Außerdem enthält diese Vorrichtung einen Impulsgenerator 14, der zwei verschiedene Taktsignale $T_1$ und $T_2$ liefert. Der Spannungsverstärker 10 enthält einen Operationsverstärker 16 mit einem Widerstand 18 am invertierenden Eingang und einen Widerstand 20 im Rückkopplungszweig, einen Spannungsteiler mit den Widerständen 22 und 24 und eine Parallelschaltung aus einer Kapazität 26 und einem Widerstand 28 am nichtinvertierenden Eingang des Operationsverstärkers 16. Man wählt einen Operationsverstärker 16, der kleine Biasströme, beispielsweise kleiner als 200 pA und einen hohen Eingangswiderstand, beispielsweise größer als $10^{12}\Omega$, hat. Die Widerstände 22 und 24 des Spannungsteilers bestimmen den Arbeitspunkt, da für den Operationsverstärker 16 nur eine einzige Versorgungsspannung vorgesehen ist. Die Kapazität 26 vermindert die Brummeinstreuung und mit dem Widerstand 28 wird verhindert, daß ein Offset-Strom des Eingangsverstärkers des Operationsverstärkers 16 zu einer Fehlfunktion der Vorrichtung führt. Der Eingang 30 des Spannungsverstärkers 10 ist mit dem Ausgang 32 des ersten elektronischen Schalters 6 verbunden. Außerdem ist der zweite elektronische Schalter 8 parallel zu dem Eingang 30 des Spannungsverstärkers 10 und dem Verbindungspunkt 34 der Widerstände 22 und 24 des Spannungsteilers angeordnet. Die beiden elektronischen Schalter 6 und 8 werden gemäß den Taktsignalen $T_1$ und $T_2$ gesteuert. Am Ausgang 36 des Spannungsverstärkers 10 ist der Integrator 12 vorgesehen, der eine Spannung $U_D$ aufsummiert.

Entsprechend dem Diagramm nach Figur 2, in dem eine Kraft F über der Zeit t aufgetragen ist, zeigt der Verlauf der Kraft F einen ansteigenden Bereich mit einer großen Zeitkonstante, einen statischen Bereich und einen fallenden Bereich mit einer großen Zeitkonstante. Diese Kraft F wirkt auf den Wandler 4 nach Figur 1.

Gemäß dem Diagramm der Figur 3, in dem die Taktsignale $T_1$ über der Zeit t aufgetragen sind, bildet dieses Taktsignal eine Pulsfolge mit gleichen zeitlichen Abständen. Der elektromechanische Wandler 4 wird gemäß der Pulsfolge des Taktsignals $T_1$ des ersten elektronischen Schalters 6 mit dem zweiten elektronischen Schalter 8 verbunden.

Dieser zweite elektronische Schalter 8 schließt den Wandler 4 gemäß einer Pulsfolge des Taktsignals $T_2$ entsprechend dem Diagramm der Figur 4 kurz. Durch das Kurzschließen des Wandlers 4 wird das Wandlersignal differenziert und mit Hilfe des Spannungsverstärkers 10 diskriminiert und verstärkt.

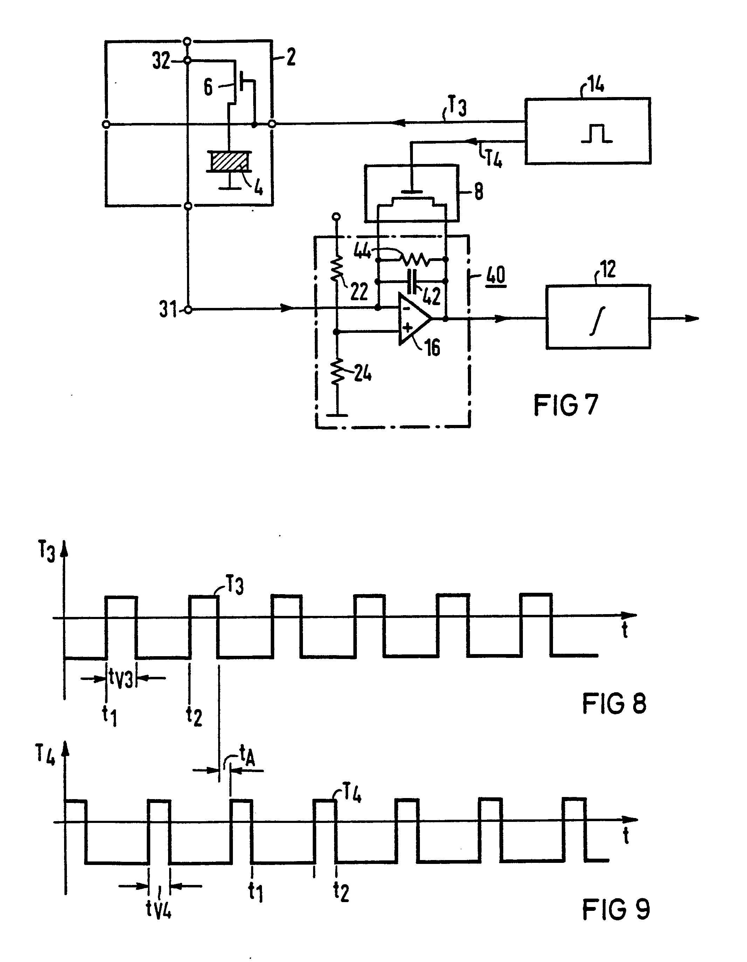

Am Ausgang 36 des Spannungsverstärkers 10 erhält man entsprechend dem Diagramm der Figur 5 eine Pulsfolge einer Spannung $U_D$, die in einem nachgeschalteten Integrator 12 aufsummiert wird.

Man erhält entsprechend dem Diagramm der Figur 6 am Ausgang 38 des Integrators 12 eine stufenförmige Spannung $U_I$, deren Abweichungen vom tatsächlichen Verlauf der Kraft F umso geringer sind, je kleiner die Kurzschlußzeiten des Taktsignals $T_2$ sind.

Man wählt für die Pulsfolgedauer $t_1$ bis $t_2$ der Taktsignale $T_1$ und $T_2$ eine Zeit von beispielsweise 10 msec.

Die Kurzschlußzeit, d.h. die Verweilzeit $t_{V2}$ des zweiten elektronischen Schalters 8 in der Stellung "ein" ist kürzer als die Verweilzeit $t_{V1}$ des ersten elektronischen Schalters 6 in der Stellung "ein". Außerdem enden die Verweilzeiten $t_{V1}$ des ersten elektronischen Schalters 6 und die Verweilzeit $t_{V2}$ des zweiten elektronischen Schalters 8 gleichzeitig. Daraus folgt, daß die Verweilzeit $t_{V2}$ des zweiten elektronischen Schalters 8 plus eine Verarbeitungszeit $t_A$ der Verweilzeit $t_{V1}$ des ersten elektronischen Schalters 6 entspricht. Die Verweilzeit $t_{V2}$ darf einerseits nicht zu kurz werden, da sonst die Ladung des elektromechanischen Wandlers 4 nicht restlos abfließen kann und somit eine Spannung am elektromechanischen Wandler 4 entstehen kann, und andererseits darf die Verweilzeit $t_{V2}$ nicht zu groß werden, da sonst die Verarbeitungszeit $t_A$ zu kurz werden kann und somit der Informationsgehalt des Wandlersignals zu gering ist für eine Weiterverarbeitung. Die Verweilzeit $t_{V2}$ kann beispielsweise etwa 1 bis 2 msec gewählt werden. Die Verarbeitungszeit $t_A$ kann beispielsweise 0,5 bis 1 msec betragen.

Durch diese Maßnahme erhält man eine Vorrichtung, die nicht nur dynamische sondern auch statische Kräfte erfassen kann.

In der Ausführungsform nach Figur 7 enthält eine Vorrichtung zur Erfassung von Kräften eine Anordnung 2, die einen ersten elektronischen Schalter 6 und einen Wandler 4 hat, einen zweiten elektronischen Schalter 8, einen Integrator 12, sowie einen Taktgenerator 14 und einen Ladungsverstärker 40. Dieser Ladungsverstärker 40 enthält den Operationsverstärker 16, den Spannungsteiler mit den Widerständen 22 und 24 und eine Parallelschaltung aus einer Kapazität 42 und einem Widerstand 44, die im Rückkopplungszweig des Operationsverstärkers 16 angeordnet ist. Parallel zu dieser Parallelschaltung aus der Kapazität 42 und dem Widerstand 44 ist der zweite elektronische Schalter 8 angeordnet. Ferner ist der Eingang 31 des Ladungsverstärkers 40 mit dem Ausgang 32 des ersten elektronischen Schalters 6 verbunden. Die beiden elektronischen Schalter 6 und 8 werden gemäß den Taktsignalen $T_3$ und $T_4$ gesteuert, die in den Figuren 8 und 9 dargestellt sind.

Gemäß den Figuren 8 und 9, in denen der Verlauf der Taktsignale $T_3$ bzw. $T_4$ gemäß der Ausführungsform nach Figur 7 über der Zeit t jeweils in einem Diagramm aufgetragen ist, haben die Taktsignale $T_3$ und $T_4$ dieselbe Pulsfolgedauer $t_1$ bis $t_2$, die man beispielsweise zu 10 msec wählen kann. Die Kurzschlußzeit, d.h. die Verweilzeit $t_{V4}$ des zweiten elektronischen Schalters 8 in der Stellung "ein" kann beispielsweise 1 bis 2 msec betragen. Ferner beginnt die Verweilzeit $t_{V4}$ des zweiten elektronischen Schalters 8 erst nach der Verweilzeit $t_{V3}$ des ersten elektronischen Schalters 6, beispielsweise 0,5 bis 1 msec, plus einer Verarbeitungszeit $t_A$ von beispielsweise 0,2 bis 0,5 msec. Durch diese Steuerung der elektronischen Schalter 6 und 8 fließt die Ladung des elektromechanischen Wandlers 4 während der Verweilzeit $t_{V3}$ in die Kapazität 42 des Ladungsverstärkers 40 und wird anschließend während der Verarbeitungszeit $t_A$ diskriminiert und verstärkt. Während der Verweilzeit $t_{V4}$ wird die Kapazität 42 kurzgeschlossen, d.h. die Wandlerladung wird differenziert.

Unter Umständen kann es zweckmäßig sein, mehrere solcher Ausführungsformen nach den Figuren 1 oder 7 in jeweils in Zeilen und Spalten anzuordnen. Eine solche Matrixanordnung benötigt man vorzugsweise bei piezoelektrischen Tastaturen für Schreibmaschinen oder Datensichtgeräten und bei piezoelektrischen Sensormatten für den Intrusionsschutz. Da man mit diesen Vorrichtungen gemäß den Figuren 1 und 7 auch statische Drücke mit einer Zeitkonstante von mehreren Minuten erfassen kann, erhält man eine piezoelektrische Tastatur mit einer "Repeat"-Funktion, d.h. ein gedrücktes Zeichen der Tastatur wird automatisch geschrieben, wenn die entsprechende Taste länger als beispielsweise 0,5 sec gedrückt wird, und einer "N-key-rollover"-Funktion, d.h., mehrere gleichzeitig gedrückte Tasten werden eindeutig erkannt.

**Patentansprüche**

1. Vorrichtung zur Erfassung von Kräften mit einem piezoelektrischen Wandler (4) und folgenden Merkmalen:

a) der piezoelektrische Wandler (4) ist über einen ersten elektronischen Schalter (6) mit dem Eingang eines Verstärkers (16) verbunden,

b) diesem piezoelektrischen Wandler (4) ist ein zweiter elektronischer Schalter (8) zum Kurzschließen des Wandlers (4) zugeordnet,

c) zur Summation der Spannung am Ausgang (36) des Verstärkers (16) ist ein Integrator (12) vorgesehen.

2. Vorrichtung nach Anspruch 1, dadurch gekennzeichnet, daß als piezoelektrische Wandler (4) piezoelektrische Folien aus Polyvinylidenfluorid PVDF vorgesehen sind.

3. Vorrichtung nach Anspruch 1, dadurch gekennzeichnet, daß für die elektronischen Schalter (6, 8) jeweils ein Taktsignal ($T_1$, $T_2$ bzw. $T_3$, $T_4$) vorgesehen ist.

4. Vorrichtung nach Anspruch 1, dadurch gekennzeichnet, daß als elektronische Schalter (6, 8) Feldeffekttransistoren FETs vorgesehen sind.

5. Vorrichtung nach Anspruch 1, dadurch gekennzeichnet, daß als Verstärker ein Spannungsverstärker (10) vorgesehen ist.

6. Vorrichtung nach Anspruch 1, dadurch gekennzeichnet, daß als Verstärker ein Ladungsverstärker (40) vorgesehen ist.

7. Vorrichtung nach Anspruch 5, dadurch gekennzeichnet, daß der Eingang (30) des Spannungsverstärkers (10) mit dem Ausgang (32) des ersten elektronischen Schalters (6) verbunden ist.

8. Vorrichtung nach Anspruch 6, <u>dadurch gekennzeichnet,</u> daß der Eingang (31) des Ladungsverstärkers (40) mit dem Ausgang (32) des ersten elektronischen Schalters (6) verbunden ist.

9. Vorrichtung nach einem der Ansprüche 1 bis 5, <u>dadurch gekennzeichnet,</u> daß der zweite elektronische Schalter (8) mit dem Ausgang (32) des ersten elektronischen Schalters (6) verbunden ist.

10. Vorrichtung nach einem der Ansprüche 1 bis 6, <u>dadurch gekennzeichnet,</u> daß der zweite elektronische Schalter (8) im Rückkopplungszweig des Ladungsverstärkers (40) angeordnet ist.

11. Vorrichtung nach einem der Ansprüche 1 bis 3, <u>dadurch gekennzeichnet,</u> daß die Verweilzeit ($t_{V2}$ bzw. $t_{V4}$) des zweiten elektronischen Schalters (8) in der Stellung "ein" kürzer ist als die Verweilzeit ($t_{V1}$ bzw. $t_{V3}$) des ersten elektronischen Schalters (6) in Stellung "ein".

12. Vorrichtung nach einem der Ansprüche 1 bis 5 und 11, <u>dadurch gekennzeichnet,</u> daß die Verweilzeit ($t_{V1}$) des ersten elektronischen Schalters (6) und die Verweilzeit ($t_{V2}$) des zweiten elektronischen Schalters (8) gleichzeitig enden (Figur 3 bzw. 4).

13. Vorrichtung nach einem der Ansprüche 1 bis 6 und 11, <u>dadurch gekennzeichnet,</u> daß die Verweilzeit ($t_{V4}$) des zweiten elektronischen Schalters (8) erst nach der Verweilzeit ($t_{V3}$) des ersten elektronischen Schalters (6) plus einer Verarbeitungszeit ($t_A$) beginnt (Figur 8 bzw 9).

## Claims

1. Arrangement for the detection of forces with a piezo-electric transducer (4), and with the following features:
a) the piezoelectric transducer (4) is connected via a first electronic switch (6) with the input of an amplifier (16),
b) a second electronic switch (8) is assigned to this piezo-electric transducer for the shorting of the transducer (4),
c) an integrator (12) is provided for the summation of the voltage at the output (36) of the amplifier (16).

2. Arrangement according to claim 1, characterised in that piezo-electric foils of polyvinylidene-fluoride PVDF are provided as piezo-electric transducers (4).

3. Arrangement according to claim 1, characterised in that a time-signal ($T_1$, $T_2$ or $T_3$, $T_4$) is provided for the electronic switches (6, 8) respectively.

4. Arrangement according to claim 1, characterised in that field effect transistors FETs are provided as electronic switches (6, 8).

5. Arrangement according to claim 1, characterised in that a voltage amplifier (10) is provided as an amplifier.

6. Arrangement according to claim 1, characterised in that a charge amplifier (40) is provided as an amplifier.

7. Arrangement according to claim 5, characterised in that the input (30) of the voltage amplifier (10) is connected with the output (32) of the first electronic switch.

8. Arrangement according to claim 6, characterised in that the input (31) of the charge amplifier (40) is connected with the output (32) of the first electronic switch (6).

9. Arrangement according to one of the claims 1-5, characterised in that the second electronic switch (8) is connected with the output (32) of the first electronic switch (6).

10. Arrangement according to one of the claims 1-6, characterised in that the second electronic switch (8) is arranged in the feedback path of the charge amplifier (40).

11. Arrangement according to one of the claims 1-3, characterised in that the dwell-time ($t_{V2}$, $t_{V4}$ respectively) of the second electronic switch (8) in the on-position is shorter than the dwell-time ($t_{V1}$, $t_{V3}$ respectively) of the first electronic switch (6) in the on-position.

12. Arrangement according to one of the claims 1-5 and 11, characterised in that the dwell-time ($t_{V1}$) of the first electronic switch (6) and the dwell-time ($t_v$ ) of the second electronic switch (8) finish simultaneously (figures 3 and 4 respectively).

13. Arrangement according to one of the claims 1-6 and 11, characterised in that the dwell-time ($t_{V4}$) of the second electronic switch (8) only commences after the dwell-time ($t_{V3}$) of the first electronic switch (6) plus a processing period ($t_A$) (figures 8 and 9 respectively).

## Revendications

1. Dispositif pour détecter des forces, comportant un transducteur piézoélectrique (4) et présentant les caractéristiques suivantes:
a) le transducteur piézoélectrique (4) est relié par l'intermédiaire d'un premier interrupteur électronique (6) à une entrée d'un amplificateur (16),
b) à ce transducteur piézoélectrique (14) est associé un second interrupteur électronique (8) servant à court-circuiter le transducteur (4),
c) pour la sommation de la tension sur la sortie (36) de l'amplificateur (16), il est prévu un intégrateur (12).

2. Dispositif suivant la revendication 1, caractérisé par le fait qu'il est prévu, comme transducteur piézoélectrique (4), des feuilles piézoélectriques constituées par du fluorure de polyvinylidène PVDF.

3. Dispositif suivant la revendication 1, caractérisé par le fait qu'il est prevu des signaux

respectifs de cadence ($T_1$, $T_2$ ou $T_3$, $T_4$) pour les interrupteurs électroniques (6, 8).

4. Dispositif suivant la revendication 1, caractérisé par le fait qu'il est prévu des transistors à effet de champ FET en tant qu'interrupteurs électroniques (6, 8).

5. Dispositif suivant la revendication 1, caractérisé par le fait qu'il est prévu, comme amplificateur, un amplificateur de tension (10).

6. Dispositif (6) suivant la revendication 1, caractérisé par le fait qu'il est prévu, comme amplificateur, un amplificateur de charge (40).

7. Dispositif suivant la revendication 5, caractérisé par le fait que l'entrée (30) de l'amplificateur de tension (10) est reliée à la partie (32) du premier interrupteur électronique (6).

8. Dispositif suivant la revendication 6, caractérisé par le fait que l'entrée (31) de l'amplificateur de charge (40) est reliée à la sortie (32) du premier interrupteur électronique (6).

9. Dispositif suivant l'une des revendications 1 à 5, caractérisé par le fait que le second interrupteur électronique (8) est relié à la sortie (32) du premier interrupteur électronique (6).

10. Dispositif suivant l'une des revendications 1 à 6, caractérisé par le fait que le second interrupteur (8) est disposé dans la branche de réaction de l'amplificateur de charge (40).

11. Dispositif suivant l'une des revendications 1 à 3, caractérisé par le fait que le temps de séjour ($t_{V2}$ ou $t_{V4}$) du second interrupteur électronique (8) dans la position "fermée" est inférieur au temps de sejour ($t_{V1}$ ou $t_{V3}$) du premier interrupteur électronique (6) dans la position "fermée".

12. Dispositif suivant l'une des revendications 1 à 5 et 11, caractérisé par le fait que le temps de séjour ($t_{V1}$) du premier interrupteur électronique (6) et le temps de séjour ($t_{V2}$) du second interrupteur électronique (8) se terminent simultanément (figure 3 ou 4).

13. Dispositif suivant l'une des revendications 1 à 6 et 11, caractérisé par le fait que le temps de séjour ($t_{V4}$) du second interrupteur electronique (8) commence seulement après le temps de séjour ($t_{V3}$) du premier interrupteur électronique (6) plus un temps de séjour ($t_A$)(figure 8 ou 9).

FIG 1

FIG 2

FIG 3

FIG 4

FIG 5

FIG 6

FIG 7

FIG 8

FIG 9